# FASCICULE DE BREVET EUROPEEN

(11) **EP 3 468 031 B1**
(45) Date de publication et mention de la délivrance du brevet: **10.03.2021**
(21) Numéro de dépôt: 18198515.1
(22) Date de dépôt: 03.10.2018
(51) Int. Cl.: H02P 31/00

(54) **MOTEUR ÉLECTRIQUE DE FREIN ÉMETTEUR DE SON**
GERÄUSCHERZEUGENDER ELEKTROMOTOR FÜR BREMSE
SOUND-EMITTING ELECTRIC MOTOR FOR BRAKE

(30) Priorité: 06.10.2017 FR 1759389
(43) Date de publication de la demande: 10.04.2019
(73) Titulaire: Foundation Brakes France SAS, 93700 Drancy (FR)
(72) Inventeur: AYACHE, Marc, 75002 PARIS (FR); PASQUET, Thierry, 94700 VINCENNES (FR)
(74) Mandataire: LLR

(56) Documents cités:
- EP-A2- 0 360 210
- DE-A1-102012 211 689
- DE-A1-102013 215 846
- US-A1- 2002 067 084
- US-A1- 2010 096 224
- US-A1- 2012 130 580

## Description

L'invention se rapporte à des moteurs électriques actionnant des systèmes de freinage, à des freins de véhicules électriques et à des véhicules électriques.

L'utilisation des moteurs électriques est commune à toutes les industries. On l'utilise par exemple en industrie ferroviaire, aéronautique et nucléaire etc... Ces moteurs se déploient sur une large gamme de puissance et d'utilisation désirées. Ainsi, avec le développement industriel croissant, ils sont incorporés dans des systèmes de plus en plus complexes, coûteux voire dangereux. Des méthodes de détection des dysfonctionnements de ces systèmes ou d'alertes auprès de leurs environnements sont donc mises en place. Quelle que soit l'industrie considérée, elle doit faire face à des contraintes de sécurité, de fiabilité et de budget. Or ces méthodes sont souvent elles-mêmes peu fiables, mettant donc l'environnement proche des systèmes étudiés en danger, ainsi que très couteuses.

C'est le cas notamment des véhicules électriques. Ces véhicules génèrent peu de bruit lors de leur fonctionnement, par exemple lorsqu'ils roulent en ville à basse vitesse. Il arrive dès lors que des piétons ou des conducteurs de véhicules environnants n'aient pas conscience de la présence ou de l'approche du véhicule, ce qui augmente les risques d'accident.

DE 10 2012 211 689 A divulgue un moteur électrique comprenant un rotor, un stator et au moins une phase US2010/096224 décrit un frein doté d'un moteur suivant le préambule de la revendication 1.

Un but de l'invention est de remédier à ces inconvénients.

A cet effet, on prévoit selon l'invention, un frein doté d'un moteur électrique selon la revendication 1.

Ainsi, un tel moteur électrique, par exemple dans un véhicule, est apte à fonctionner en tant que transducteur électro-acoustique. Ainsi, alors qu'il ne génère aucun couple, il permet d'émettre un son de fréquence prédéterminée. On peut donc utiliser le moteur comme émetteur de son, ce qui peut éviter d'avoir à disposer d'un émetteur spécifique. Cette fonction est notamment intéressante à bord des véhicules électriques qui sont relativement silencieux si bien qu'il faille parfois trouver un moyen de signaler aux piétons la présence ou l'arrivée du véhicule. L'invention peut servir à cela.

Avantageusement, le moteur est apte à émettre un son d'intensité prédéterminée

Ainsi, un tel moteur électrique, par exemple dans un véhicule, permet à l'utilisateur d'identifier son véhicule suivant l'intensité et la fréquence préétablie dans un parking par exemple.

Avantageusement, le moteur est apte à émettre un son modulable en intensité et/ou en fréquence.

Le son peut alors être différent selon un paramètre temporel ou encore selon la criticité de la situation responsable de l'émission du son. Il est également possible de paramétrer plusieurs sons différents selon plusieurs situations prédéterminées. Par exemple, suivant la vitesse du véhicule il est possible d'avertir l'environnement extérieur ou encore de paramétrer un son caractéristique d'une défaillance technique du véhicule. Il est alors également possible d'introduire une gradation d'intensité dans l'avertissement délivré ou encore selon la criticité de la défaillance détectée.

De manière préférentielle, la fréquence du son est comprise entre 500 et 10000 Hz, d'avantage préférentielle entre 500 et 4500 Hz, ou encore plus préférentielle entre 1800 et 2600 Hz. Ainsi, le son est audible pour un maximum de personnes ou d'animaux.

Avantageusement, le frein comprend en outre des moyens de commande aptes à commander l'alimentation de la ou d'au moins l'une des phases du moteur avec un courant électrique de sorte que le moteur émet le son alors que le rotor est immobile par rapport au stator.

Les moyens de commandes permettent d'automatiser l'émission du son.

Avantageusement, les moyens de commande sont aptes à être désactivés afin de laisser à l'utilisateur le choix de commander l'émission du son.

Il peut alors déclencher le son quand il le souhaite et par exemple choisir les paramètres du son : intensité, fréquence etc...

Selon l'invention, on prévoit également un véhicule équipé d'au moins un frein tel que décrit précédemment.

Par exemple, les freins étant des organes situés à divers endroits d'un véhicule, il est possible d'émettre le son depuis différents endroits du véhicule.

Avantageusement, les moyens de commandes sont agencés de façon à ce que le moteur émette le son dans au moins l'une des situations suivantes :
- une distance entre le véhicule et un obstacle, déterminée par un ou plusieurs capteur(s) de position embarqué(s) sur le véhicule, est inférieure à une valeur prédéterminée,
- une vitesse du véhicule, déterminé par un ou plusieurs capteur(s) de vitesse embarqué(s) sur le véhicule, est inférieure à une valeur prédéterminée, et/ou
- il se produit une défaillance prédéterminée d'au moins un élément technique du véhicule.

Selon l'invention, on prévoit également un procédé d'émission d'un son, dans lequel on alimente au moins une phase d'un moteur électrique de frein avec un courant électrique de façon à provoquer une émission d'un son par le moteur sans faire tourner un rotor du moteur par rapport à un stator du moteur, le son étant de niveau sonore supérieur à 35 dB, de préférence supérieur à 40 dB voire 50 dB et présentant au moins une fréquence prédéterminée.

De manière préférentielle, le procédé est mis en œuvre à bord d'un véhicule.

De manière préférentielle, on émet le son dans au moins l'une des situations suivantes
- une distance entre un véhicule équipé du moteur et un obstacle est inférieure à une valeur prédéterminée,
- une vitesse d'un véhicule équipé du moteur est inférieure à une valeur prédéterminée, et/ou
- il se produit une défaillance prédéterminée d'au moins un élément d'un véhicule équipé du moteur.

Avantageusement, le courant a une amplitude et/ou une fréquence prédéterminée de sorte que le son a une intensité et/ou au moins une fréquence prédéterminée(s).

De manière préférentielle, on module en amplitude et/ou en fréquence le courant électrique de sorte que le son est modulé en intensité et/ou en fréquence.

Nous allons maintenant présenter un mode de réalisation de l'invention donné à titre d'exemple non limitatif et à l'appui des figures annexées sur lesquelles :
- la figure 1 est une vue de face d'un moteur électrique selon l'invention.
- la figure 2 est un schéma d'un ensemble selon l'invention.
- la figure 3 est un schéma d'un frein selon l'invention
- les figures 4 et 5 sont des schémas d'un véhicule selon l'invention.
- la figure 6 illustre un moteur 1 selon l'invention ainsi qu'un commutateur 26.
- La figure 7 illustre un mode de réalisation particulier dans lequel un véhicule 14 comprend quatre moteurs 1.

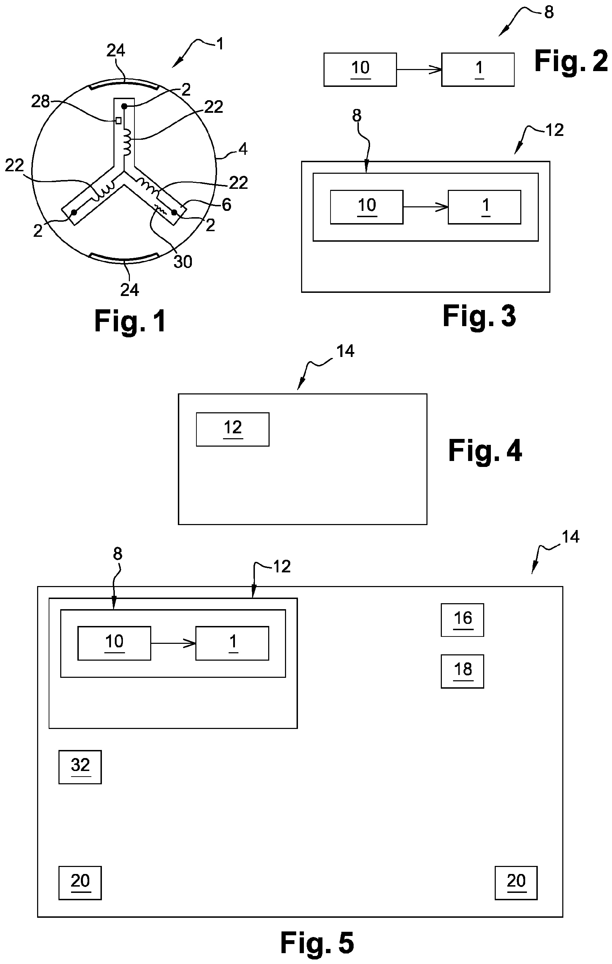

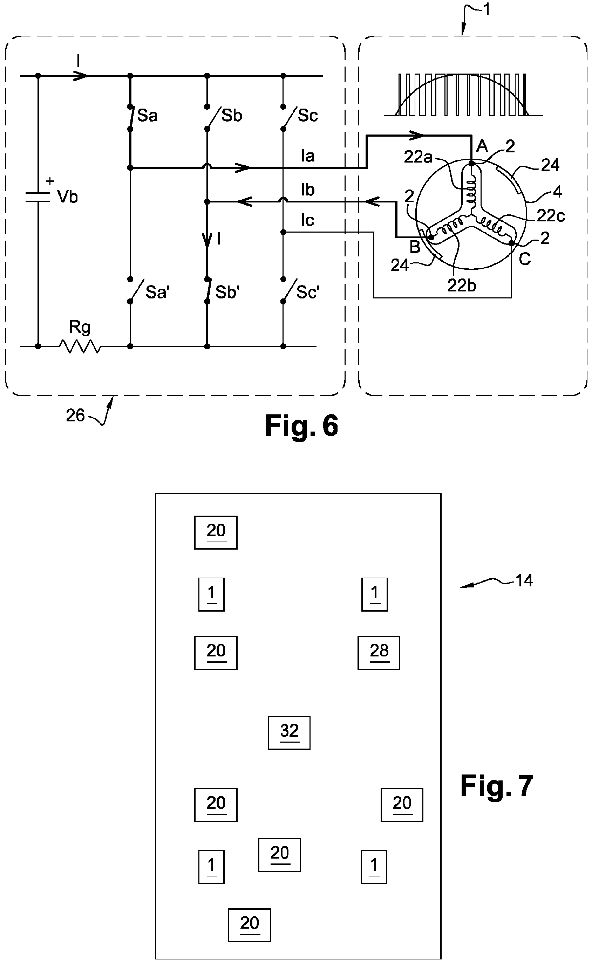

Un moteur électrique convertit l'énergie électrique en énergie mécanique. Cette énergie mécanique peut se traduire par le produit d'un couple par un déplacement angulaire (rotation) pour les moteurs électriques rotatifs tandis que les moteurs linéaires produisent une énergie mécanique correspondant au produit d'une force par un déplacement linéaire. Comme illustré sur les figures 1 et 6, dans le présent mode de réalisation de l'invention, le moteur électrique 1 est un moteur rotatif triphasé comprenant un stator 6 et un rotor 4. Le rotor 4 est la partie mobile par rapport au stator 6. Le stator 6 comprend un ensemble de bobines 22 alors que le rotor 4 comprend des aimants 24.

Le stator 6 comprend d'une partie magnétique sur laquelle sont placées trois bobines 22, généralement à base de fils de cuivre et géométriquement décalées de 120° et parcourues par des courants alternatifs aux bornes des phases 2 du moteur 1 présentant le même déphasage électrique. Le stator 6 produit donc un champ magnétique, créé par les bobines 22, tournant à la même fréquence que les courants d'alimentation, à mesure que les bobines 22 sont parcourues l'une après l'autre par le courant.

Les aimants 24 du rotor 4 cherchent à chaque instant à s'orienter dans le sens du champ et provoquent la rotation du rotor 4.

Dans le présent mode de réalisation, le moteur 1 est un moteur sans balais : il ne contient aucun collecteur tournant et donc pas de balais. A la place du collecteur tournant, un système électronique de commande ou commutateur 26 assure la commutation du courant dans les bobines 22. Ainsi, les tensions d'alimentation doivent être adaptées continuellement pour que le champ reste en avance sur la position du rotor, et ainsi créer un couple moteur. C'est la raison pour laquelle le système électronique de commutation 26, ou commutateur, assure la commutation du courant dans les enroulements statoriques 22, afin de maintenir un champ tournant dans le moteur.

Il existe plusieurs types de systèmes électroniques de commutation 26. Cependant de manière générale, le système électronique de commutation 26 comprend au moins un interrupteur, un condensateur et une bobine, comme illustré à la figure 6.

Une première manière de procéder est d'utiliser des capteurs à effet Hall 28. Généralement au nombre de trois, ils sont utilisés pour connaitre à tout moment la position du rotor 4, et adapter en conséquence l'alimentation des bobines 22 et le champ magnétique en résultant. Le capteur 28 détecte le passage d'un pôle magnétique, et à partir de cette information le circuit de commande électronique 26 assure la commutation des bobines 22. L'utilisation de capteurs à effet Hall dans les moteurs sans balais permet une excellente régulation.

Pour éviter l'utilisation de capteurs à effet Hall 28, certains circuits de commande 26 de moteurs sans balais recourent à des bobines 30 non alimentées afin de déterminer la position du rotor. Ces bobines 30 font offices de capteurs de positions dans la mesure où à chaque instant donné, le commutateur 26 mesure la force contre-électromotrice (fcem) des bobines 30, émises quand le rotor 4 tourne, en réaction au champ tournant, et en déduisent la position du rotor 4 puis le moment pour déclencher la commutation. Cette solution permet d'éviter l'emploi de capteurs à effet Hall 28, et donc de réduire le prix du moteur sans balais. Par contre, au démarrage, la fcem est trop faible pour être utilisable. Il faut donc utiliser un autre mode de commande sans capteurs pour le démarrage des moteurs sans balais. Généralement, ils sont démarrés comme des moteurs pas à pas, en commutant par exemple les phases 2 à une fréquence croissante prédéfinie, suffisamment lentement pour que le moteur sans balais ne décroche pas, i.e. ne perde pas la synchronisation avec le champ tournant naissant.

Dans le présent mode de réalisation de l'invention, le système de commutation 26 est composé d'un condensateur polarisé aux bornes duquel il existe une tension Vb. Ce condensateur est branché en dérivation avec une résistance Rg et des interrupteurs Sa, Sb, Sc et Sa', Sb', Sc'. Le système de commutation 26 est branché aux trois phases 2 du moteur électrique 1. Il permet donc d'alimenter les trois phases 2 (A, B ou C) avec des courants électriques Ia, Ib et Ic. Ici, le système électronique de commutations 26 ne fait pas partie des moyens de commande 10 du moteur électrique illustrés à la figure 2.

Les moyens de commande 10 ne sont pas nécessairement intégrés au moteur 1. Ils font plus globalement partie de l'électronique embarquée, ou système embarqué 32, du véhicule 14 comme l'illustre la figure 5. En effet, les systèmes embarqués 32 ne sont pas toujours des modules indépendants. Ils peuvent être intégrés dans le dispositif qu'ils contrôlent.

Les systèmes embarqués 32 exécutent des tâches prédéfinies. Plutôt que des systèmes universels effectuant plusieurs tâches, les systèmes embarqués 32 sont étudiés pour effectuer des tâches précises. Par exemple, ils permettent de recueillir, et de traiter les signaux envoyés par les capteurs de position 16 ou de vitesse du véhicule 18. Ces capteurs 16 et 18 sont situés à bord du véhicule (ils sont dits «embarqués ») et permettent notamment de définir, et de mesurer, des conditions prédéfinies d'émission du son par le moteur 1.

A présent nous allons décrire à l'appui de la figure 6 le procédé selon lequel le moteur est apte à émettre un son lorsqu'on alimente la ou au moins l'une des phases du moteur avec un courant électrique sans faire tourner le rotor par rapport au stator, le son étant de niveau sonore supérieur à 35 dB, de préférence supérieur à 40 dB, voire 50 dB, et présentant au moins une fréquence prédéterminée.

Les moyens de commande 10 déclenchent, selon des causes explicitées plus bas, l'alimentation de la phase 2 (A) du moteur 1 par un courant la. La phase 2 transmet le courant I à la bobine 22a, elle-même reliée à la bobine 22b. Ainsi, la fréquence et l'amplitude du courant sont transmises via les bobines 22a et 22b à un aimant qui lui les transmet à une membrane acoustique mobile émettant alors le son d'intensité et de fréquence fixées par le courant émis I. La cage tournante du moteur 1 peut jouer le rôle de caisse de résonnance. Cependant, puisque la phase Ic n'est pas alimentée, aucun champ magnétique tournant ne guide les aimants 24 du rotor 4. Ainsi, le rotor 4 ne tourne pas. Il est immobile par rapport au stator 6. Le son est donc émis alors que le rotor 4 ne tourne pas. De plus, l'émission du son est indépendante de la position du rotor 4 vis-à-vis du stator 6. L'émission du son ne nécessite donc pas l'utilisation des capteurs de position du rotor 4 vis-à-vis du stator 6 décrits précédemment. En outre, le courant peut ne traverser que l'une des bobines 22a et 22b, et non les deux comme décrit précédemment ; cela n'altère pas le procédé d'émission du son.

Le procédé peut être automatisé selon des paramètres recueillis par différents capteurs sur le véhicule 14. Les capteurs 16 et 18 envoient des signaux électriques, images de la distance séparant le véhicule 14 d'un obstacle et de la vitesse du véhicule 14, au système embarqué 32. Selon une valeur seuil prédéterminée, par exemple désignée par l'utilisateur via l'interface, le système embarqué 32 calcule si la valeur seuil est dépassée et les moyens de commande 10 déclenchent l'émission du son selon le procédé expliqué plus haut

De même, le système embarqué 32 est relié à des éléments techniques 20 qu'il commande par ailleurs. L'utilisateur peut choisir de surveiller un paramètre d'un de ces éléments techniques 20 via l'interface, par exemple, lorsque le véhicule est l'arrêt ou à faible vitesse (démarrage, arrêt ou encore conduite dans un parking). La valeur seuil est alors binaire : fonctionnement normal lors d'un check-in de contrôle au démarrage ou en phase d'arrêt. Si les capteurs de contrôle détectent une anomalie, le système embarqué 32 capte le signal correspondant, ou l'absence de signal, et les moyens de commande 10 déclenchent l'émission du son. La détection de l'anomalie peut être effectuée grâce à des stratégies de monitoring. Par exemple, on paramètre l'envoi, par l'organe du véhicule testé, d'un message d'état à intervalle de temps prédéfini (0.1 seconde par exemple) vers le système embarqué 32. Si le système embarqué ne reçoit pas un message d'état prévu, l'organe testé est considéré comme défaillant et le système embarqué 32 déclenche l'émission du son.

Si un dysfonctionnement est détecté par le système embarqué 32, les moyens de commande 10 déclenchent l'émission d'un son afin d'avertir l'utilisateur ou l'environnement du véhicule 12. L'utilisateur peut également évaluer l'évolution de plusieurs paramètres définis selon la nature du son émis : par exemple, suivant la tonalité du son émis par le moteur 1 à faible vitesse, il est alerté de l'évolution de la distance le séparant d'un obstacle. Le son peut également être émis suivant un critère de vitesse du véhicule 12 : en dessous d'une certaine valeur ou au contraire au-dessus d'une certaine valeur, l'émission du son est déclenchée afin d'avertir l'utilisateur ou son environnement.

Les moyens de commande 10 permettent aussi à l'utilisateur de déclencher lui-même l'émission du son. C'est une alternative au klaxon classique ou un mode actif de l'évaluation d'un paramètre.

Ainsi, ces moyens de commande 10, quelle que soient leur configuration et leur interface, permettent une meilleure interaction avec l'utilisateur et un meilleur contrôle des paramètres de l'émission du son ou des paramètres du son. Ils permettent de moduler la fréquence entre 500 Hz et 10000 Hz, de préférence entre 500 et 4500 Hz, et encore plus préférentiellement entre 1800 et 2600 Hz, et/ou l'amplitude. Par exemple, elle ne dépasse pas 90 dB, voire 80 dB ou encore 70 dB. Cependant, l'intensité du son est également supérieure à 35 dB, voire 40 dB ou encore 50 dB. En effet, il faut pouvoir la différencier sans ambiguïté d'un son résultant d'un dysfonctionnement du moteur. Par ailleurs, l'intensité du son est non invasive dans le présent mode de réalisation.

Il est aussi possible d'activer ou de désactiver le mode automatique de l'émission du son. L'utilisateur peut aussi faire varier les conditions d'émission du son.

Selon l'invention, le moteur 1 est celui d'un frein 12 d'un véhicule 14 comme l'illustrent les figures 4 et 5. Il est alors envisageable d'équiper les quatre roues du véhicule 14 d'un moteur 1 comme illustré à la figure 7. Quatre sources potentielles de sons aux quatre coins du véhicule sont alors installées, chacune pouvant avoir un son propre et paramétré de manière indépendante en intensité et/ou en fréquence. Ainsi, le système embarqué 32 peut déclencher l'émission du son selon des critères propres à chacune des quatre sources d'émission de son tels que ceux explicités précédemment. Par exemple, il est possible d'automatiser le procédé d'émission uniquement pour les roues arrières ou pour les roues avants ou encore de paramétrer l'émission d'un son par chaque moteur 1 selon des critères différents.

L'invention présente de nombreux avantages en plus de ceux déjà énoncés. Tout d'abord, l'utilisation d'un moteur sans balais élimine tous les inconvénients du moteur à courant continu classique : problèmes de commutation au niveau du collecteur, défrettage, inertie, refroidissement, puissance massique nettement plus grande, géométrie plus simple ou encore une meilleure durée de vie. De tels moteurs produisent des couples de quelques newtons mètres jusqu'à plusieurs centaines de Nm et des puissances de quelques centaines de watts jusqu'à des centaines de kilowatts. À performances égales, leur rendement est meilleur, cela étant dû en partie à l'absence de pertes mécaniques et électriques liées aux balais (surtout lors de faibles charges). Mais aussi la plupart du temps à leur inertie notablement réduite par rapport à une machine équivalente à courant continu, ce paramètre étant prépondérant dans de nombreuses applications.

Les systèmes embarqués 32 doivent répondre à de fortes contraintes de réactivité pour des raisons de fiabilité et de rentabilité. D'autres ayant peu de contraintes de performances permettent de simplifier le système 32 et de réduire les coûts de fabrication. Pouvoir utiliser un même élément technique - le moteur 1 - pour réaliser une autre fonction que celle prévue initialement pour un moteur est donc un autre avantage de l'invention. Le système embarqué 32 n'a pas besoin d'être paramétré vis-à-vis d'un haut-parleur spécifiquement dédié à l'émission du son.

Un avantage de l'invention est l'amélioration de la sécurité pour l'utilisateur et son environnement, notamment les piétons. Les véhicules 14 sont souvent électriques. Ainsi, ils ne produisent pas de sons aussi élevés que les véhicules à moteur thermique. C'est ainsi que l'émission du son grâce à l'invention permet de pallier cet inconvénient en émettant des sons différenciés (prévention ou alarme, différentes tonalités ou intensités) selon des situations dont certaines sont dangereuses. Par exemple, lorsque le véhicule se rapproche d'un piéton, l'émission du son permet d'avertir le piéton et le conducteur du véhicule. L'émission du son améliore la sécurité sans composant supplémentaire. Cet avantage est substantiel compte-tenu de l'accroissement de l'électronique embarquée et donc de la puissance de calcul nécessaire. De plus, éviter d'ajouter un nouveau composant limite les risques de pannes, les surcoûts de construction et de maintenance et le poids total du véhicule. De plus, il permet au procédé d'être implémenté sur des systèmes déjà installés. Enfin, l'invention ne génère qu'une faible consommation d'énergie additionnelle, ce qui est également bénéfique sur les plans économiques et environnementaux.

Un autre avantage est le fonctionnement en tant que haut-parleur du moteur sans interférence avec le fonctionnement du frein quand le moteur 1 est celui d'un frein 12.

L'invention n'est pas limitée aux modes de réalisation présentés et d'autres modes de réalisation apparaîtront clairement à l'homme du métier. Par exemple, il est possible d'installer le moteur 1 dans toute machine tournante équipée d'un frein ou encore toute machine dotée de système d'alarmes sonores, indépendamment d'un véhicule.

### Nomenclature et références numériques :

- 1: - Moteur
- 2: - Phase
- 4: - Rotor
- 6: - Stator
- 8: - Ensemble
- 10: - Moyens de commande
- 12: - Frein
- 14: - Véhicule
- 16: - Capteur de position
- 18: - Capteur de vitesse
- 20: - Elément technique du véhicule
- 22: - Bobine (22a, 22b, 22c)
- 24: - Aimant
- 26: - Commutateur
- 28: - Capteur à effet Hall
- 30: - Bobine capteur fcem
- 32: - Système embarqué
- 22: - Bobine (22a, 22b, 22c)
- 24: - Aimant
- 26: - Commutateur
- 28: - Capteur à effet Hall
- 30: - Bobine capteur fcem
- 32: - Système embarqué

## Revendications

1. Frein (12) doté d'un moteur électrique (1) comprenant :
- un rotor (4),
- un stator (6), et
- au moins une phase (2),
**caractérisé en ce que** le moteur est apte à émettre un son lorsqu'on alimente la ou au moins l'une des phases (2) du moteur (1) avec un courant électrique sans faire tourner le rotor (4) par rapport au stator (6), le son étant de niveau sonore supérieur à 35 dB, de préférence supérieur à 40 dB, voire 50 dB, et présentant au moins une fréquence prédéterminée.

2. Frein (12) selon la revendication précédente dans lequel la fréquence du son est comprise entre 500 et 10000 Hz.

3. Frein (12) selon la revendication précédente apte à émettre un son de niveau sonore prédéterminé.

4. Frein (12) selon l'une quelconque des revendications précédentes apte à émettre un son modulable en intensité et/ou en fréquence.

5. Frein (12) selon l'une quelconque des revendications précédentes comprenant en outre des moyens de commande (10) aptes à commander l'alimentation de la ou d'au moins l'une des phases (2) du moteur (1) avec un courant électrique de sorte que le moteur émet le son alors que le rotor (4) est immobile par rapport au stator (6).

6. Frein (12) selon la revendication précédente dans lequel les moyens de commande (10) sont aptes à être désactivés.

7. Véhicule (14) équipé d'au moins un frein (12) selon l'une quelconque des revendications précédentes.

8. Véhicule (14) équipé d'au moins un frein selon la revendication 5 ou 6 dans lequel les moyens de commandes (10) sont agencés de façon à ce que le moteur (1) émette le son dans au moins l'une des situations suivantes :
- une distance entre le véhicule (14) et un obstacle, déterminée par un ou plusieurs capteur(s) de position (16) embarqué(s) sur le véhicule (14), est inférieure à une valeur prédéterminée,
- une vitesse du véhicule (14), déterminé par un ou plusieurs capteur(s) de vitesse (18) embarqué(s) sur le véhicule (14), est inférieure à une valeur prédéterminée, et/ou
- il se produit une défaillance prédéterminée d'au moins un élément technique (20) du véhicule (12).

9. Procédé d'émission d'un son, **caractérisé en ce qu'**on alimente au moins une phase (2) d'un moteur électrique (1) de frein (12) avec un courant électrique de façon à provoquer une émission d'un son par le moteur (1) sans faire tourner un rotor (4) du moteur (1) par rapport à un stator (6) du moteur (1), le son étant de niveau sonore supérieur à 35 dB, de préférence supérieur à 40 dB voire 50 dB et présentant au moins une fréquence prédéterminée.

10. Procédé selon la revendication précédente dans lequel on met en œuvre le procédé à bord d'un véhicule (14).

11. Procédé selon l'une quelconque des revendications 9 et 10 dans lequel on émet le son dans au moins l'une des situations suivantes :
- une distance entre un véhicule (14) équipé du moteur (1) et un obstacle est inférieure à une valeur prédéterminée,
- une vitesse d'un véhicule (14) équipé du moteur (1) est inférieure à une valeur prédéterminée, et/ou
- il se produit une défaillance prédéterminée d'au moins un élément (20) d'un véhicule (14) équipé du moteur (1).

12. Procédé selon l'une quelconque des revendications 9 à 11 dans lequel le courant a une amplitude et/ou une fréquence prédéterminée de sorte que le son a une intensité et/ou au moins une fréquence prédéterminée(s).

13. Procédé selon l'une quelconque des revendications 9 à 11 dans lequel on module en amplitude et/ou en fréquence le courant électrique de sorte que le son est modulé en intensité et/ou en fréquence.

## Patentansprüche

1. Bremse (12) mit einem Elektromotor (1), bestehend aus:
- einem Rotor (4),
- einem Stator (6), und
- mindestens einer Phase (2),
**dadurch gekennzeichnet, dass** der Motor eingerichtet ist, ein Geräusch zu emittieren, wenn die oder mindestens eine der Phasen (2) des Motors (1) mit einem elektrischen Strom versorgt wird, ohne den Rotor (4) relativ zum Stator (6) zu drehen, wobei das Geräusch einen Schallpegel von mehr als 35 dB, vorzugsweise mehr als 40 dB oder sogar 50 dB, und mindestens eine vorbestimmte Frequenz aufweist.

2. Bremse (12) nach dem vorhergehenden Anspruch, wobei die Frequenz des Schalls zwischen 500 und 10000 Hz liegt.

3. Bremse (12) nach dem vorhergehenden Anspruch, die eingerichtet ist, ein Geräusch mit vorgegebenem Schallpegel abzugeben.

4. Bremse (12) nach einem der vorangehenden Ansprüche, die eingerichtet ist, einen in der Intensität und/oder Frequenz variablen Schall abzugeben.

5. Bremse (12) nach einem der vorangehenden Ansprüche, ferner aufweisend Steuermittel (10), die eingerichtet sind, die Versorgung der oder mindestens einer der Phasen (2) des Motors (1) mit einem elektrischen Strom zu steuern, so dass der Motor Schall abgibt, während der Rotor (4) in Bezug auf den Stator (6) stillsteht.

6. Bremse (12) nach dem vorhergehenden Anspruch, bei der die Steuermittel (10) abschaltbar ausgebildet sind.

7. Fahrzeug (14) das mit mindestens einer Bremse (12) nach einem der vorhergehenden Ansprüche ausgestattet ist.

8. Fahrzeug (14), das mit mindestens einer Bremse nach Anspruch 5 oder 6 ausgestattet ist, wobei die Steuermittel (10) so angeordnet sind, dass der Motor (1) in mindestens einer der folgenden Situationen Schall abgibt:
- ein von einem oder mehreren Positionssensor(en) (16) an Bord des Fahrzeugs (14) ermittelter Abstand zwischen dem Fahrzeug (14) und einem Hindernis ist kleiner als ein vorgegebener Wert.
- eine von einem oder mehreren Geschwindigkeitssensor(en) (18) am Fahrzeug (14) ermittelte Geschwindigkeit des Fahrzeugs (14) liegt unter einem vorgegebenen Wert, und/oder
- ein vorbestimmter Ausfall von mindestens einer technischen Komponente (20) des Fahrzeugs (14) tritt auf.

9. Verfahren zum Emittieren eines Geräusches, **dadurch gekennzeichnet, dass** mindestens eine Phase (2) eines Elektromotors (1) für eine Bremse (12) mit einem elektrischen Strom versorgt wird, um den Motor (1) zu veranlassen, ein Geräusch zu emittieren, ohne einen Rotor (4) des Motors (1) relativ zu einem Stator (6) des Motors (1) zu drehen, wobei das Geräusch einen Schallpegel von mehr als 35 dB, vorzugsweise mehr als 40 dB oder sogar 50 dB, und mindestens eine vorbestimmte Frequenz aufweist.

10. Verfahren nach dem vorhergehenden Anspruch, bei dem das Verfahren an Bord eines Fahrzeugs (14) durchgeführt wird.

11. Verfahren nach einem der Ansprüche 9 und 10, bei dem der Ton in mindestens einer der folgenden Situationen ausgegeben wird:
- ein Abstand zwischen einem Fahrzeug (14), das mit dem Motor (1) ausgestattet ist, und einem Hindernis ist kleiner als ein vorgegebener Wert,
- eine Geschwindigkeit eines Fahrzeugs (14), das mit dem Motor (1) ausgestattet ist, liegt unter einem vorgegebenen Wert, und/oder
- ein vorbestimmter Ausfall mindestens einer Komponente (20) eines mit dem Motor (1) ausgestatteten Fahrzeugs (14) tritt auf.

12. Verfahren nach einem der Ansprüche 9 bis 11, wobei der Strom eine vorbestimmte Amplitude und/oder Frequenz hat, so dass der Ton eine vorbestimmte Intensität und/oder mindestens eine Frequenz hat.

13. Verfahren nach einem der Ansprüche 9 bis 11, bei dem der elektrische Strom in der Amplitude und/oder Frequenz moduliert wird, so dass der Schall in der Intensität und/oder Frequenz moduliert wird.

## Claims

1. Brake (12) provided with an electric motor (1) comprising:
- a rotor (4),
- a stator (6), and
- at least one phase (2),
**characterised in that** the motor is adapted to emit a sound when the or at least one of the phases (2) of the motor (1) is supplied with an electric current without turning the rotor (4) relative to the stator (6), the sound having a sound level greater than 35 dB, preferably greater than 40 dB, even 50 dB, and having at least one predetermined frequency.

2. Brake (12) according to the preceding claim wherein the frequency of the sound is between 500 and 10 000 Hz.

3. Brake (12) according to the preceding claim adapted to emit a sound of predetermined sound level.

4. Brake (12) according to any one of the preceding claims adapted to emit a sound whose intensity and/or frequency can be modulated.

5. Brake (12) according to any one of the preceding claims further comprising control means (10) adapted to control the supply of the or at least one of the phases (2) of the motor (1) with an electric current such that the motor emits the sound when the rotor (4) is stationary relative to the stator (6).

6. Brake (12) according to the preceding claim wherein the control means (10) are adapted to be deactivated.

7. Vehicle (14) equipped with at least one brake (12) according to any one of the preceding claims.

8. Vehicle (14) equipped with at least one brake according to claim 5 or 6, wherein the control means (10) are arranged so that the motor (1) emits the sound in at least one of the following situations:
- a distance between the vehicle (14) and an obstacle, determined by one or more position sensors (16) on board the vehicle (14), is less than a predetermined value,
- a speed of the vehicle (14), determined by one or more speed sensors (18) on board the vehicle (14), is less than a predetermined value, and/or
- a predetermined failure of at least one technical component (20) of the vehicle (12) occurs.

9. Method for emitting a sound, **characterised in that** at least one phase (2) of an electric motor (1) of a brake (12) is supplied with an electric current to cause the emission of a sound by the motor (1) without turning a rotor (4) of the motor (1) relative to a stator (6) of the motor (1), the sound having a sound level greater than 35 dB, preferably greater than 40 dB, even 50 dB, and having at least one predetermined frequency.

10. Method according to the preceding claim wherein the method is implemented on board a vehicle (14).

11. Method according to claim 9 or 10 wherein the sound is emitted in at least one of the following situations:
- a distance between a vehicle (14) equipped with the motor (1) and an obstacle is less than a predetermined value,
- a speed of a vehicle (14) equipped with the motor (1) is less than a predetermined value, and/or
- a predetermined failure of at least one component (20) of a vehicle (14) equipped with the motor (1) occurs.

12. Method according to any one of claims 9 to11, wherein the current has a predetermined amplitude and/or frequency such that the sound has a predetermined intensity and/or at least one predetermined frequency.

13. Method according to any one of claims 9 to11, wherein the amplitude and/or frequency of the electric current is/are modulated such that the intensity and/or frequency of the sound is/are modulated.
